# DEMANDE DE BREVET EUROPEEN

(11) **EP 1 426 742 A1**
(43) Date de publication de la demande: **09.06.2004**
(21) Numéro de dépôt: 02292947.5
(22) Date de dépôt: 29.11.2002
(51) Int. Cl.: G01G 19/08, B60R 25/00

(54) **Dispositif d'interdiction de démarrage d'un véhicule en cas de surcharge**

(71) Demandeur: Vignes, Evic, 34000 Montpellier (FR)
(72) Inventeur: Vignes, Evic, 34000 Montpellier (FR)

(57) **Abrégé**

Il est constitué d'un capteur de mesure de poids ou de distance, et/ou de pression, d'un système de gestion des informations recueillies, de capteurs de mouvement des roues du véhicule.

En cas de surcharge les systèmes actionnent le/les systèmes de freinage du véhicule.

Le système ne peut se déclencher intempestivement dès que le véhicule se déplace, un témoin de mouvement, interdisant son activation.

## Description

La présente invention concerne un système interdisant le déplacement d'un véhicule en cas de dépassement de sa charge limite autorisée par la loi et/ou par ses limites techniques et/ou ses données constructeur.

Ce système fonctionne quel que soit les systèmes de suspension et de freinage.

Ce procédé est constitué d'un ou plusieurs éléments mesurant le poids du véhicule, d'une centrale de gestion de l'information mesurée commandant le déclenchement du frein de parking et/ou du frein de secours et/ou du système de freinage du véhicule et de capteurs de mouvement des roues du véhicule.
- La prise de mesure du poids peut être faite :
   1) Sur les boudins pneumatiques dans le cas de suspensions pneumatiques (Prise de pression de l'air ou mesure de la distance entre les flasques du boudin pneumatique)
   2) Sur l'interface lames de suspensions-essieux dans le cas de suspensions à lames (capteurs d'écrasement)
   3) Sur l'interface boudin caoutchouc, axe de rotation des bras de suspensions, dans le cas de suspensions dites à boudins caoutchouc
   4) Soit par référencement d'une distance définie entre le système de suspension et le châssis du véhicule ou de sa coque autoporteuse
- Ce système ne peut se déclencher intempestivement une fois le véhicule en déplacement car une sécurité interdit son action dès que la ou les roues tournent. La mesure du poids s'effectue sur le poids réel, une temporisation au déclenchement peut être utilisée. La neutralisation du système est déclenchée par une prise de mesure de mouvement sur une ou toutes les roues du véhicule. On peut utiliser par exemple le signal donné par les roues phoniques d'un système d'assistance au freinage et/ou à la conduite. Cet exemple n'est pas limitatif. En cas de surcharge à l'arrêt, le système actionne automatiquement un ou les systèmes de freinage du véhicule. Une fois la charge rétablie dans la limite autorisée, le système peut se désactiver automatiquement ou demander une désactivation manuelle par un opérateur extérieur au système. La désactivation peut se faire à distance.

Ce système peut être utilisé industriellement sur tout véhicule quel que soit son P.T.C et/ou son P.T.A.C.

Ce procédé met en oeuvre :
a) Des prises de mesures de pression et/ou courrant et/ou air et/ou hydraulique et/ou de poids.
b) Des capteurs de mouvements : ceux-ci peuvent être couplés en série ou en parallèle suivant le type d'information recherchée.

Ces deux systèmes (a et b) sont les seuls à autoriser une mesure juste quelque soit :
- Le type de liaison au sol
- Le type de structure du véhicule (châssis ou coque autoporteuse)
- La taille et la pression d'utilisation des pneumatiques employées

Ce système peut être indissociable a d'autres systèmes d'assistance au freinage et/ou à la conduite. Ces 2 types de prises de mesure (a et b) envoient leurs informations au boîtier (électrique et/ou électronique, électro-hydraulique et/ou électro-pneumatique) déclenchant le ou les systèmes de freins et/ou de freins de secours et/ou de freins de parking. Le déclenchement du système peut également s'effectuer par l'intermédiaire de l'affichage digital des systèmes de pesage embarqués sur châssis (ou coque autoporteuse) quelque soit leur classe de charge :
- ce système peut être couplé à un ou des systèmes informatiques de données à distance et/ou embarqués

## Revendications

1. Système d'interdiction de déplacement en cas de surcharge **caractérisé par le fait qu'**il comporte l'utilisation de prises de mesures de poids et/ou de pression et/ou de courant et/ou de distance sur l'interface châssis-trains roulant ou coque autoporteuse et des capteurs de mouvement des roues.

2. Système d'interdiction de déplacement selon la revendication 1 **caractérisé en ce que** les types de mesures sont liés par un système gérant le déclenchement des freins de secours et/ou de parking uniquement en position arrêt du véhicule et uniquement en cas de dépassement du poids réel autorisé du véhicule.

3. Système d'interdiction de déplacement selon la revendication 1 **caractérisé en ce que**, une fois le véhicule en mouvement le système ne peut être actif.

4. Système d'interdiction de déplacement selon la revendication 1 **caractérisé en ce qu'**il est adaptable à tout véhicule roulant, flottant, volant, quel que soit son poids.

5. Système d'interdiction de déplacement selon la revendication 1 **caractérisé en ce qu'**il peut être indissociable à d'autres systèmes d'assistance au freinage et/ou à la conduite.
